# FASCICULE DE BREVET EUROPEEN

(11) **EP 1 914 815 B1**
(45) Date de publication et mention de la délivrance du brevet: **02.06.2010**
(21) Numéro de dépôt: 07117779.4
(22) Date de dépôt: 02.10.2007
(51) Int. Cl.: H01L 41/09

(54) **Tourelle d'orientation deux axes avec motorisation piezo electrique**
Drehkranz zur Ausrichtung von zwei Achsen mit piezoelektrischer Motorisierung
Turret with positioning in two axes and piezoelectric motorisation

(30) Priorité: 19.10.2006 FR 0609187
(43) Date de publication de la demande: 23.04.2008
(73) Titulaire: SAGEM Défense Sécurité, 75015 Paris (FR)
(72) Inventeur: Thibout, Florent,, 75015, PARIS (FR); Robineau, Jacques,, 75015, PARIS (FR); Audren, Jean-Thierry,, 75015, PARIS (FR); Aragones, Julien,, 75015, PARIS (FR)
(74) Mandataire: Cabinet Plasseraud

(56) Documents cités:
- EP-A1- 0 518 733
- US-A- 3 914 029
- US-A- 5 172 023
- US-B1- 6 288 848
- HANQI ZHUANG ET AL: "MODELING GIMBAL AXIS MISALIGHNMENTS AND MIRROR CENTER OFFSET IN A SINGLE-BEAM LASER TRACKING MEASUREMENT SYSTEM" INTERNATIONAL JOURNAL OF ROBOTICS RESEARCH, SAGE SCIENCE PRESS, THOUSAND OAKS, US, vol. 14, no. 3, 1 juin 1995 (1995-06-01), pages 211-224, XP000511477 ISSN: 0278-3649

## Description

La présente invention porte sur un dispositif d'orientation du type dit tourelle ou tête d'orientation « deux axes », et plus particulièrement une tourelle d'orientation aux grands angles ayant des capacités d'orientation et de vélocité exceptionnelles permettant son application à diverses fonctions optroniques requérant une grande couverture angulaire, une précision et une vélocité de pointage élevées, et de faibles encombrement et masse.

On connaît déjà, notamment du document US-3 914 029, des dispositifs d'orientation du type dit tourelle ou tête d'orientation « deux axes », pour orienter au moins un ensemble de transmission d'au moins un faisceau optique et/ou électro-magnétique en site et/ou en gisement, par rotation dudit ensemble de transmission autour respectivement d'un axe de site et/ou d'un axe de gisement.

Dans ces tourelles connues, l'ensemble de transmission, par exemple un bloc optique à miroirs ou prismes apte à recevoir un faisceau lumineux incident à dévier pour produire un faisceau transmis, est monté pivotant sur une fourche autour d'un premier axe dit axe de site, et apte à être entrainé en rotation autour dudit axe de site par un premier moteur supporté par ladite fourche, laquelle est montée pivotante sur une embase autour d'un second axe, dit axe de gisement, perpendiculaire à l'axe de site, et est apte à être entrainée en rotation autour dudit axe de gisement par un second moteur supporté par ladite embase, laquelle se monte sur une plate-forme pouvant être terrestre et immobile, ou mobile et montée sur un véhicule terrestre, un navire ou un aéronef.

Sur les dispositifs d'orientation existants de ce type, les deux moteurs sont des moteurs rotatifs électriques, c'est-à-dire des moteurs électromagnétiques classiques, qui peuvent être des moteurs couples ou des moteurs pas à pas.

Pour fournir des couples élevés, nécessaires à l'obtention d'accélérations angulaires et/ou vitesses angulaires suffisantes pour obtenir des temps de ralliement d'une tourelle d'orientation sur un secteur donné de l'espace qui soient appropriés aux diverses fonctions optroniques envisagées, les masses et encombrements de ces moteurs sont importants, d'où une grande inertie de la tourelle, ce qui retentit négativement sur les performances recherchées. Aussi, pour augmenter le couple fourni tout en maintenant les moteurs électriques dans des plages de masse et d'encombrement raisonnables, l'entraînement des équipages mobiles en site et en gisement est assuré depuis les moteurs électriques par l'intermédiaire de transmissions avec réducteurs mécaniques de vitesse. Mais l'utilisation de réducteurs mécaniques, nécessaires dans les motorisations des tourelles d'orientation actuellement mises en oeuvre, entraine à son tour des inconvénients en termes de coûts, de présence de frottements secs, de moyens de rattrapage de jeux ainsi que d'un asservissement pour compenser les défauts, c'est-à-dire pour garantir un positionnent aussi précis que possible d'un faisceau, en particulier optique, émis par la tourelle d'orientation.

L'utilisation de moteurs couples permet, certes, de s'affranchir de réducteurs de vitesse et du jeu, mais, par contre, ces moteurs ne présentent pas un rapport couple/masse intéressant au point de permettre une réduction de volume et de masse propice à l'emploi d'une tourelle d'orientation à moteurs couples sur des plates formes de petite taille (aéronefs ou engins terrestres) par la facilité d'intégration naturelle d'une telle tourelle.

Lorsque les moteurs électriques des tourelles d'orientation existantes sont des moteurs pas à pas, leur inconvénient essentiel est que le pas élémentaire de ces moteurs n'est pas assez petit, d'où il résulte un manque de précision dans l'orientation des tourelles.

Ainsi, l'utilisation de motorisations électromagnétiques entraîne une masse, un volume, une consommation énergétique, et un coût qu'il serait avantageux de réduire, ces paramètres étant cruciaux dans les systèmes embarqués à bord d'aéronefs, ou dans les véhicules terrestres dans lesquels la place est comptée.

Les dispositifs d'orientation existants de ce type, reposant sur l'utilisation de technologies classiques, ne permettent donc pas d'obtenir les performances recherchées, telles que mentionnées ci-dessus, de grande couverture angulaire avec une précision et une vélocité de pointage très élevées, simultanément à de faibles encombrements, masses et coûts, avantageusement renforcées par une grande simplicité de structure, du fait notamment que les technologies de motorisation classiques ne permettent pas d'atteindre un rapport couple/masse intéressant, sauf au prix de performances de masse et de volume qui ne permettent pas une intégration dans une tourelle orientable d'une structure appropriée aux applications et utilisations envisagées par la présente invention. En effet, pour de telles tourelles d'orientation, l'architecture opto-mécanique doit présenter des caractéristiques de compacité et de centrage propices à l'équilibre et à la compacité générale d'un dispositif d'orientation selon la présente invention.

En conséquence, un but particulièrement intéressant de l'invention est de réaliser une tourelle d'orientation, en particulier pour orienter un faisceau optique laser, avec un temps de ralliement sur n'importe quel secteur de l'espace situé dans au moins un hémisphère (espace supérieur à 2 π stéradians) aussi court que possible, et particulièrement avec un temps de ralliement de 90° d'une ligne de visée optique en moins de 100 ms, et de préférence en moins de 50 ms.

Un autre but de l'invention est de réaliser une tourelle d'orientation du type présenté ci-dessus, procurant une orientation la plus précise possible, et autorisant un déplacement du moteur avec un pas élémentaire le plus faible possible, par exemple de l'ordre du microradian.

Un but supplémentaire de l'invention est également d'équiper une tourelle d'orientation d'une motorisation de pièces d'orientation du ou des faisceau(x) procurant un couple massique plus élevé. En effet, une motorisation à fort couple permet non seulement d'économiser un dispositif de réduction de vitesse, mais également de minimiser l'impact de la masse des moteurs eux-mêmes sur les effets d'inertie de la tourelle, pour ainsi mieux contrôler les déplacements et orientations du ou des faisceau(x), en particulier optique(s), en minimisant simultanément le volume d'ensemble de la tourelle.

Compte tenu de ce qui précède, il serait particulièrement avantageux de réaliser une tourelle d'orientation pouvant atteindre 90° de rotation d'une ligne de visée en moins de 100 ms, permettant de minimiser le volume, la masse et la consommation électrique, de minimiser les parties externes au porteur sur lequel est fixée une telle tourelle d'orientation, et donc de minimiser les effets néfastes de traînée et de réduction de rayon d'action, de supprimer tout réducteur de vitesse, d'augmenter la facilité d'intégration sur aéronef (ou n'importe quel véhicule ou installation terrestre ou navale), d'augmenter la valeur du couple massique, d'avoir un adressage ou couverture spatiale égale ou supérieure à 2nsr, et simple et économique à mettre en oeuvre et à réaliser.

Le document US-5 172 023 divulgue un moteur comportant :
- un stator comprenant une couronne statorique dentée de section circulaire,
- un rotor comportant un patin rotorique annulaire de section circulaire, sensiblement coaxial à la couronne statorique dentée et en appui axial contre la couronne sous un effort de précontrainte,
- un anneau piézoélectrique à secteurs d'excitation qui sert à exciter la couronne statorique dentée, ledit anneau étant sensiblement coaxial à la couronne et appliqué de sorte à pouvoir exciter la couronne statorique et à provoquer le déplacement relatif du rotor lorsque les secteurs d'excitation de l'anneau piézoélectrique est alimenté en courant électrique approprié.

L'invention tel que définie par les revendications 1 et 8 vise à améliorer la simplicité, la compacité du dispositif d'orientation et à réduire l'énergie de l'équipage mobile en site.

A cet effet, concernant l'équipage mobile en gisement l'invention propose un dispositif d'orientation se distinguant du document US-3 914 029 par les caractéristiques mentionnées dans la partie caractérisante de la revendication 1.

Les moteurs rotatifs piézoélectriques à onde progressive sont des actionneurs connus, notamment par les documents de brevet US 6,288,475, US 6,573,636, US 6,674,217 et EP 0 884 832, auxquels on peut se reporter pour davantage de précisions sur les structures qu'ils peuvent présenter, et leurs modes de commande et de fonctionnement.

Dans des modes de réalisations préférés, le dispositif d'orientation présentera avantageusement les caractéristiques complémentaires faisant l'objet des revendications dépendantes 2 à 7.

Par analogie avec l'équipage mobile en site, et pour les mêmes raisons notamment de simplicité, compacité et réduction d'inertie l'équipage mobile en gisement, l'invention propose un dispositif d'orientation se distinguant du document US-3 914 029 par les caractéristiques mentionnées dans la partie caractérisante de la revendication 8.

Dans des modes de réalisations préférés, le dispositif d'orientation présentera avantageusement les caractéristiques complémentaires faisant l'objet des revendications dépendantes 9 à 15.

D'autres avantages et caractéristiques de la présente invention ressortiront d'un exemple particulier de réalisation, décrit ci-dessous, à titre non limitatif en référence aux dessins annexés sur lesquels :
- la figure 1 est une vue schématique partielle de la tourelle d'orientation selon l'invention et représente une vue en coupe selon l'axe de site de la tourelle, et
- la figure 2 est une vue schématique partielle de la tourelle d'orientation selon l'exemple de la figure 1 et représentant plus précisément une vue en coupe selon l'axe de gisement de cette tourelle.

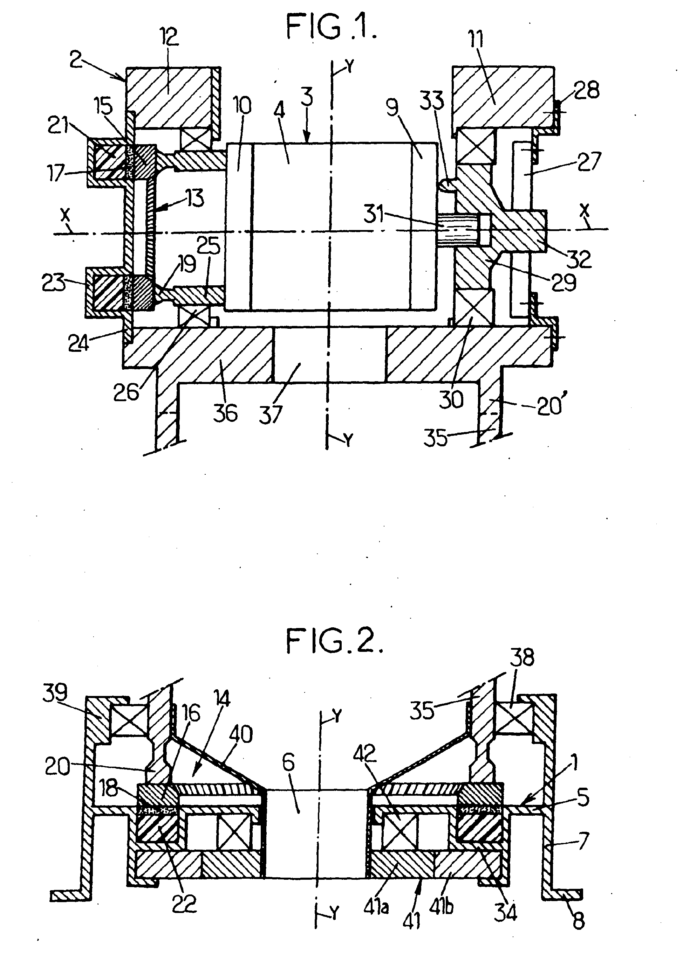

La tourelle d'orientation des figures 1 et 2 comprend essentiellement trois sous-ensembles principaux, qui sont un sous-ensemble mécanique, un bloc optique compatible laser et une motorisation avec asservissement.

Le sous-ensemble mécanique comprend une embase 1 (fig.2), sur laquelle une fourche 2 (fig.1) est montée rotative autour d'un axe de gisement YY, et un équipage mobile 3 monté rotatif sur la fourche 2 autour d'un axe de site XX perpendiculaire à l'axe de gisement YY.

En outre, l'embase 1 est avantageusement montée sur une plate-forme de support par l'intermédiaire d'un quatrième sous-ensemble principal, qui est un dispositif de gyrostabilisation, non représenté car pouvant être de tout type convenable connu, par exemple avec un coeur de capteur gyroscopique « trois axes » logé dans un boîtier et relié par une suspension à l'embase 1, sous laquelle le boîtier est fixé.

L'embase 1, la fourche 2 et l'équipage mobile en site 3 sont constitués pour permettre la rotation d'un bloc optique 4, et donc aussi d'une ligne de visée de ce dernier, selon les axes de site XX et de gisement YY, de sorte à couvrir un espace d'orientation d'au moins un hémisphère, c'est-à-dire d'au moins deux π stéradians, sans angle mort, et en permettant la visée zénithale.

Le bloc optique 4, compatible avec des sources laser, en particulier infrarouges, et qui est intégré à l'équipage mobile en site 3, peut comprendre des miroirs, mais est avantageusement constitué, dans cet exemple, d'un bi-prisme fixé par ses bases entre deux supports 9 et 10 montés tourillonnants, entre les deux branches 11 et 12 de la fourche 2, autour de l'axe de site XX, qui est perpendiculaire aux bases du bi-prisme 4 et passe par le centre géométrique de ce dernier, tandis que l'axe de gisement YY est parallèle aux bases du bi-prisme 4 et passe également par son centre géométrique.

Le bi-prisme 4 est destiné à recevoir au moins un faisceau lumineux cohérent incident, émis par exemple par une source laser (non représenté) logée dans l'embase 1 ou par une cible éclairée dans l'espace et réfléchissant un faisceau vers le bi-prisme 4, qui est apte à dévier le faisceau incident pour produire un faisceau transmis et à diviser le faisceau transmis en deux sous-faisceaux dirigés respectivement vers une cible dans un secteur de l'espace couvert ou vers un système d'imagerie (non représenté) logé dans l'embrase 1, par exemple une caméra thermique, le bi-prisme 4 étant associé à un dispositif de retard optique apte à introduire une différence de chemin optique entre les deux sous-faisceaux qui est supérieure à la longueur de cohérence du faisceau incident. A cet effet, le bi-prisme 4 peut comporter deux prismes dans des matériaux différents, comme décrit dans FR 2 882 440, de sorte que la différence d'indice de réfraction entre les prismes introduit ladite différence de chemin optique, mais, en variante, le bi-prisme peut comporter une lame optique montée mobile entre les deux prismes pour constituer le dispositif de retard optique, comme décrit dans FR 2 882 441.Dans les deux réalisations, le bi-prisme est compatible d'une utilisation laser, et en particulier compatible avec les bandes spectrales utilisées pour le pointage de la tourelle dans les différents types de poursuite possibles (passive, active, trois bandes), sans générer d'interférence, ni à l'émission ni à la réception.

Le sous-ensemble de motorisation est constitué de deux moteurs rotatifs piézoélectriques à onde progressive, dont l'un 13 est un moteur de site, entrainant l'équipage mobile en site 3 en rotation autour de l'axe de site XX, et l'autre 14 est un moteur de gisement, entrainant un équipage mobile en gisement, constitué principalement par la fourche 2 et les composants supportés par cette dernière, en rotation autour de l'axe de gisement YY.

Comme tout moteur rotatif piézoélectrique à onde progressive, chacun des moteurs 13 et 14 comprend :
- un stator, réalisé sous la forme d'une couronne statorique dentée de section circulaire, respectivement 15 ou 16, supportée par un support rigide,
- un anneau, respectivement 17 ou 18, d'éléments en céramique piézoélectrique définissant des secteurs d'excitation de la couronne statorique 15 ou 16 correspondante lorsque les secteurs d'excitation sont alimentés en courants électriques sinusoïdaux déphasés générant une onde progressive, qui déforme axialement la couronne statorique 15 ou 16, laquelle est appliquée, par sa face radiale d'extrémité axiale tournée vers son support rigide, contre l'anneau piézoélectrique 17 ou 18 correspondant, ainsi interposé entre le support rigide et la couronne statorique 15 ou 16 correspondante, à laquelle l'anneau piézoélectrique 17 ou 18 est coaxial,
- un rotor réalisé sous la forme d'un patin rotorique annulaire de section circulaire respectivement 19 ou 20, qui est en appui sensiblement axial sur la couronne statorique 15 ou 16 correspondante sous un effort axial de précontrainte, et
- des moyens de poussée respectivement 21 ou 22, propres à appuyer axialement la couronne statorique dentée 15 ou 16 contre le patin rotorique annulaire 19 ou 20 correspondant avec précontrainte.

Grâce à ces moyens de poussée 21 ou 22, la déformation axiale en onde progressive de la couronne statorique 15 ou 16 par l'anneau d'éléments piézoélectriques 17 ou 18 correspondant provoque la rotation du patin rotorique annulaire 19 ou 20 correspondant dans le sens opposé au sens de déplacement de l'onde progressive sur la couronne statorique 15 ou 16, de manière connue, l'entrainement du patin rotorique 19 ou 20 étant assuré par friction des dents de la couronne statorique 15 ou 16 contre la surface de contact en regard sur le patin rotorique 19 ou 20, la qualité du contact étant déterminante pour la régularité de fonctionnement du moteur et déterminant en partie le couple maximum du moteur. Le patin rotorique 19 ou 20 est coaxialement précontraint statiquement contre la couronne statorique 15 ou 16 correspondante pour obtenir une force de contact appropriée, de l'ordre de 200 N pour un moteur ayant de 50 à 60 mm de diamètre, par exemple.

A cet effet, chacun des moteurs 13 et 14 est avantageusement réalisé en utilisant les enseignements de la demande de brevet FR 06 00170, de sorte que le support rigide de la couronne statorique 15 ou 16 correspondante est conformé pour supporter annulairement cette couronne statorique 15 ou 16 de façon que les efforts de support soient appliqués à cette couronne 15 ou 16 sensiblement symétriquement par rapport au plan cylindrique médian de cette couronne, et, simultanément, le patin rotorique annulaire 19 ou 20 de contact correspondant est solidaire de la pièce rotative à mouvoir, en l'occurrence le support 10 du bi-prisme 4 pour ce qui est du moteur de site 13, et la fourche 2 pour ce qui est du moteur de gisement 14.

Dans le mode de réalisation selon la figure 1, le support rigide pour la couronne statorique 15 et l'anneau 17 comporte une couronne annulaire 23, coaxiale autour de l'axe de site XX et sous-jacente à la couronne statorique 15, et ménagée axialement en saillie vers l'extérieur de la branche 12 de la fourche 2, de sorte à délimiter une gorge annulaire de section quadrangulaire dans une bride 24 radiale (par rapport à l'axe de site XX) de fermeture de l'extrémité axiale externe d'un alésage coaxial traversant la branche 12, cette bride 24 étant fixée, par exemple par vissage de sa périphérie, dans la branche 12, et destinée à supporter les composants statiques du moteur en site 13, à savoir la couronne statorique 15, l'anneau piézoélectrique 17 et les moyens de poussée 21. Ces moyens de poussée 21, fournissant l'effort de précontrainte appuyant axialement l'un contre l'autre le patin rotorique 19 et la couronne statorique 15, sont constitués, dans cet exemple, d'un corps annulaire élastiquement déformable axialement, logé dans la couronne 23 de support rigide, et ainsi interposé entre, d'une part, le fond de cette couronne 23, et, d'autre part, l'anneau piézoélectrique 17 et la couronne statorique dentée 15, laquelle s'étend, par rapport à la bride 24, en saillie vers l'intérieur de la fourche 2, et plus précisément vers l'intérieur de l'alésage axial de la branche 12 de cette fourche 2. Le corps annulaire constituant les moyens de poussée 21 est, dans une réalisation simple et économique, un bloc annulaire en un matériau élastiquement déformable, par exemple en élastomère. L'anneau 17 peut être également logé, au moins partiellement, dans la couronne 23 ou, au contraire, en saillie avec la couronne statorique 15 par rapport à la bride 24 et vers l'intérieur de la fourche 2.

Par sa face radiale (par rapport à l'axe de site XX) qui est opposée à celle par laquelle la couronne statorique 15 est en contact avec l'anneau piézoélectrique 17, cette couronne statorique 15 est ainsi précontrainte contre une face radiale du patin rotorique annulaire 19, directement solidaire d'une ou intégré à une extrémité axiale d'un arbre d'entrainement en site 25 qui est tubulaire, coaxial à la couronne statorique 15, à l'anneau piézoélectrique 17 et au bloc annulaire d'élastomère 21, et de préférence de même diamètre moyen qu'eux, cet arbre tubulaire 25 étant directement solidaire, par son autre extrémité axiale, du support latéral 10 du bi-prisme 4, et guidé en rotation coaxiale autour de l'axe de site XX par un roulement 26 à billes ou à autres corps roulants, monté radialement à l'extérieur de l'arbre 25, entre ce dernier et la branche 12 de la fourche 2, pour guider l'équipage mobile en site 3 en rotation dans cette branche 12 de fourche 2.

Ainsi, la couronne statorique 15 assure un entrainement direct en rotation de l'équipage mobile en site 3 grâce à l'intégration directe du patin rotorique annulaire 19 sur l'arbre d'entrainement en site 25 de cet équipage mobile 3, ce montage étant rendu possible du fait que le pas élémentaire du moteur piézoélectrique 13, c'est-à-dire le plus petit déplacement de ce moteur, est de quelques microradians pour un moteur 13 ayant un diamètre de l'ordre de 50 à 60 mm, et piloté avec une boucle d'asservissement en position très précise, grâce à un codeur angulaire optique 27, retenu dans la partie d'extrémité externe d'un alésage coaxial de la branche 11 de la fourche 2 par une bride vissée 28, tandis que le rotor du codeur 27 est lié en rotation au bi-prisme 4 par l'intermédiaire d'un disque 29 coaxial, guidé en rotation dans la branche 11 de la fourche 2 par un second roulement 30, à billes ou à tous autres éléments roulants appropriés, avec un montage axialement glissant d'un tourillon 31 cylindrique, solidaire du support 9 du bi-prisme 4 et engagé axialement coulissant dans un alésage coaxial du moyeu du disque 29, qui se prolonge lui-même vers le codeur optique 27 par un embout cylindrique coaxial 32. De plus, le disque 29 est rendu solidaire en rotation du support 9 et du prisme 4 par un organe 33 de liaison en rotation du disque 29 et du support 9.

En variante, afin de réduire encore l'encombrement axial de l'équipage mobile en site 3, et donc de réduire l'inertie de ce dernier, l'arbre tubulaire d'entrainement en site 25 peut être supprimé et le patin rotorique annulaire 19 être réalisé directement en saillie annulaire coaxiale sur la face radiale du support 10 qui est tournée vers la bride 24 et la couronne statorique dentée 15, contre laquelle le patin rotorique 19 est en appui sous précontrainte. Dans cette variante, le guidage en rotation de l'équipage mobile en site 3, du côté du moteur de site 13, peut être assuré par le roulement 26 monté radialement autour du support 10 du bi-prisme 4 et entre ce support 10 et la branche 12 de la fourche 2.

Dans les deux modes de réalisation du moteur de site 13 qui viennent d'être décrits, la couronne statorique 15 et le patin rotorique annulaire 19, précontraints axialement (selon XX) l'un contre l'autre, apparaissent toujours en saillie axiale entre la bride 24, dont la couronne de support rigide 23 loge au moins en partie les moyens de poussée 21, d'une part, et d'autre part, le support 10 du bi-prisme 4.

Concernant le moteur rotatif piézoélectrique de gisement 14, sa réalisation peut être analogue à celle décrite ci-dessus pour le moteur de site 13. En effet, l'embase 1, qui comporte une plaque 5 annulaire et circulaire radiale (par rapport à l'axe de gisement YY) présentant un orifice circulaire central 6, et dont la périphérie est reliée par une jupe tubulaire 7 à un rebord 8 libre présentant des points de fixation de l'embase 1 sur une plate-forme, est telle que sa plaque annulaire 5 présente une couronne de support rigide 34, analogue à la couronne de support rigide 23 de la bride 24, c'est-à-dire annulaire et coaxiale autour de l'axe YY, de section quadrangulaire et en saillie sur la plaque 5 du côté opposé au patin rotorique annulaire 20, pour délimiter une gorge annulaire logeant les moyens de poussée 22, de préférence également réalisés sous la forme d'un bloc annulaire d'un matériau élastiquement déformable tel qu'un élastomère, interposé entre cette couronne 34, d'une part, et, d'autre part, l'anneau piézoélectrique 18 et la couronne statorique dentée 16, cette dernière étant au moins en partie en saillie au-dessus de la plaque annulaire 5 et que le bloc d'élastomère 22 maintient précontraint contre le patin rotorique annulaire 20 directement solidaire de ou intégré à l'extrémité inférieure ( sur la figure 2) d'un arbre coaxial tubulaire 35 d'entrainement en rotation de la fourche 2 et des composants montés sur cette dernière, autour de l'axe de gisement YY, l'autre extrémité axiale de l'arbre 35 étant solidaire en rotation de la fourche 2 autour de l'axe YY, et de préférence, comme représenté sur la figure 1, d'une seule pièce avec un plateau 36 de support de la fourche 2, ce plateau 36 étant agencé en disque circulaire présentant un orifice central 37 sensiblement dans le prolongement axial (selon l'axe de gisement YY) de l'orifice central 6 de la plaque annulaire 5 de l'embase 1.

Ainsi, l'équipage mobile en gisement, essentiellement constitué par la fourche 2 et les composants qu'elle supporte, et par l'arbre 35 d'entrainement en gisement, est directement entraîné en rotation par la couronne statorique dentée 16 entrainant le patin rotorique annulaire 20 d'une seule pièce avec cet arbre 35, qui est guidé autour de l'axe de gisement YY par un roulement 38, à billes ou à tous autres éléments roulants appropriés, retenu par exemple, sur l'embase 1 par un support tubulaire 39.

En variante, le patin rotorique annulaire du moteur 14 peut être réalisé comme représenté en 20' sur la figure 1, en étant réalisé directement en saillie sous la face radiale inférieure du disque annulaire 36 de support des deux branches 11 et 12 de la fourche 2, dans le cas où l'arbre d'entrainement en gisement 35 est supprimé, ou réduit à sa plus simple expression, de sorte que ce patin rotorique annulaire 20' vienne directement en contact avec la couronne statorique dentée 16 du moteur de gisement 14, le guidage en rotation par le roulement 38 pouvant alors être assuré radialement autour de la partie inférieure du disque annulaire 36 et entre cette partie inférieure et le support annulaire 39 fixé à l'embase 1.

En outre, dans l'exemple comportant un arbre d'entrainement 35 en gisement (voir figure 2), un organe tubulaire partiellement tronconique 40 permet de solidariser en rotation l'arbre 35 au rotor 41a d'un codeur angulaire 41 dont le stator 41b est retenu par l'embase 1, par exemple en dessous de la couronne 34 de support rigide des composants non tournants du moteur 14, comme schématiquement représenté sur la figure 2. Dans ce montage, un guidage en rotation autour de l'axe de gisement YY peut également être assuré par un autre roulement 42 monté entre, d'une part, le rotor 41a du codeur angulaire 41, et, d'autre part, un logement annulaire formé sur l'embase 1, autour de l'orifice central 6 de sa plaque annulaire 5.

Dans les deux réalisations décrites ci-dessus de l'entraînement en gisement de la fourche 2 par le moteur de gisement 14, on retrouve que la couronne statorique dentée 16 et le patin rotorique annulaire 20 ou 20' sont toujours face à face et axialement en saillie respectivement par rapport à la plaque circulaire 5 de l'embase 1, qui supporte les parties non tournantes de ce moteur 14, et, de l'autre côté, par rapport au plateau annulaire 36 qui constitue la base de la fourche 2.

Dans les deux cas, le moteur de gisement 14 est réalisé comme un moteur à axe creux ou tubulaire entrainant la fourche 2 en gisement tout en définissant un passage central, grâce aux orifices centraux 6 et 37, pour le ou les faisceaux optiques ( par exemple de télémétrie laser et d'imagerie) nécessaires aux utilisations de la tourelle, notamment en pointage pour assurer une poursuite passive ou active, voire en balayage pour assurer une veille.

La tourelle d'orientation ainsi réalisée est d'une structure très simplifiée et d'une grande vélocité en fonctionnement, et elle permet d'atteindre des performances de ralliement de 90° de la ligne de visée du bi-prisme 4 en moins de 100 ms, grâce à la motorisation piézoélectrique à grand rapport couple sur masse, très supérieur (de l'ordre de 3 à 4 fois) à celui des moteurs électromagnétiques classiques, et qui est encore amélioré du fait de la très faible inertie de cette tourelle, dans laquelle la faible masse des moteurs 13 et 14 eux-mêmes en raison de la simplicité et de la compacité de leur structure ainsi que du faible nombre de leurs éléments constitutifs, permet de réduire encore l'inertie de la tourelle d'orientation. Il en résulte que non seulement le rapport couple sur masse peut être très grand, mais également que le couple maximum peut être obtenu pratiquement instantanément, ce qui permet d'atteindre des accélérations angulaires très élevées, de l'ordre de 3000 rad /s².

De plus, cette structure permet de profiter des roulements tels que 26 et 38 de la tourelle pour l'intégration des moteurs 13 et 14, grâce à l'intégration directe des rotors 19 et 20 dans les organes (25, 35) à entrainer en rotation, d'où une simplification supplémentaire de la conception, ainsi qu'une plus grande réduction du nombre de pièces mécaniques, donc de la masse et de l'encombrement de la tourelle. En outre, dans la ou les pièces à entrainer en rotation autour de l'axe de gisement YY, un volume central peut être dégagé, dans l'arbre d'entrainement 35 en gisement et/ou dans le codeur 41 de gisement, pour le passage d'au moins un faisceau optique ou l'intégration de tout autre dispositif requérant une disposition axiale selon l'axe de gisement YY.

En variante également, le codeur angulaire 41 et le moteur de gisement 14 peuvent être réalisés sous la forme d'un bloc moteur-codeur en gisement, qui se monte sur l'embase 1 de sorte que le moteur 14 et le codeur 41 sont sensiblement de part et d'autre de la plaque annulaire 5 de l'embase 1, le moteur 14 étant essentiellement du côté de cette plaque 5 qui est tourné vers la fourche 2, tandis que le codeur 41 est de l'autre côté, protégé à l'intérieur de la jupe tubulaire 7.

De manière alternative, il est également possible d'entraîner le plateau support 36 de la fourche 2 par l'intermédiaire d'un ensemble moteur-codeur à axe plein, déporté de l'axe de gisement Y-Y et apte à entraîner le plateau support 36 par l'intermédiaire d'une courroie ou d'un engrenage.

Selon d'autres variantes encore, les moyens de poussée 21 et 22 peuvent ne pas être des corps annulaires en élastomère, mais des agencements conformes aux autres modes de réalisation décrits dans FR 06 00170, tels que des corps tubulaires étanches, définis par au moins une paroi élastiquement déformable et, de préférence, deux parois latérales opposées, sensiblement en forme de C ou de S simple ou multiple, raccordée(s) de façon étanche à la couronne statorique 15 ou 16 correspondante, et remplis d'un gaz sous pression, ou encore deux ensembles de bras de suspension régulièrement répartis et interposés entre la couronne statorique 15 ou 16 correspondante et deux couronnes fixes constituant le support rigide correspondant, disposées radialement de part et d'autre de la couronne statorique 15 ou 16, l'une intérieure et l'autre extérieure, et toutes deux écartées radialement de la couronne statorique 15 ou 16, les bras de suspension ayant une forme générale de C et/ou de S pour être élastiquement déformables et interposés symétriquement entre la couronne statorique 15 ou 16 correspondante et respectivement les deux couronnes fixes.

Grâce aux codeurs angulaires 27 et 41, les deux moteurs piézo-électriques 13 et 14 sont avantageusement asservis selon une loi de commande à modèle de comportement spécifique. Cette loi de commande utilise une carte spécifique d'alimentation du moteur et prend en compte le comportement du moteur, ainsi que la non linéarité de la fréquence en fonction de la vitesse afin de pouvoir parcourir sans restriction le domaine de fonctionnement du moteur dans l'espace fréquence vitesse sans risquer le calage.

L'utilisation de cette commande permet de tirer le meilleur parti de chaque moteur 13 ou 14 en terme de couple, de vitesse et de précision de positionnement pour tous les déplacements.

L'asservissement des moteurs 13 et 14 est réalisé par des boucles de vitesse et de position ayant des caractéristiques non linéaires spécifiques aux moteurs piézo-électriques.

La boucle de vitesse, qui est la boucle de plus bas niveau, inclut la caractéristique vitesse/fréquence du moteur 13 ou 14. Cette caractéristique est mesurée à une température de fonctionnement donnée et les effets liés à la thermique (variations de température de fonctionnement) sur le comportement du moteur 13 ou 14 sont compensés. Avantageusement, la commande du moteur rotatif piézoélectrique 13 et/ou 14 est assurée comme décrit dans la demande de brevet français FR 06 06438. Outre ce modèle destiné à linéariser le comportement du moteur, la boucle de vitesse est équipée d'un correcteur linéaire.

La boucle de position (de plus haut niveau) comprend un correcteur non-linéaire, qui prend en compte les capacités dynamiques du moteur 13 ou 14. Cette boucle génère des consignes de vitesse qui permettent aux pièces optiques 4 de rejoindre les positions commandées en évitant les phénomènes de calage liés à des consignes incompatibles avec le domaine de fonctionnement du moteur 13 ou 14.

Les boucles d'asservissement des axes motorisés sont équivalentes et permettent en outre d'introduire des informations de poursuite ou de stabilisations issues de capteurs tels que des écartomètres ou des gyromètres.

Ainsi, chaque équipage mobile en rotation autour d'un axe (de site ou de gisement) est asservi en position et/ou en vitesse, tout en contrôlant le couple et/ou l'accélération en rotation de l'équipage mobile considéré (en site ou en gisement).

En dehors du Nadir, il est possible de réaliser la stabilisation du faisceau uniquement avec le dispositif d'orientation de l'invention. En effet, une telle innovation est permise grâce aux choix d'architecture suivants :
- une motorisation piézoélectrique avec entrainement direct et une loi de commande évoluée permettant d'atteindre des accélérations de la ligne de visée 3000 rad/s² ;
- l'ensemble de transmission optique 4 et d'orientation de la ligne de visée est centré inertiellement avec une inertie réduite ; et
- l'intégration de codeurs 27 et 41 de types connus et à haute résolution.

La mise en oeuvre de l'ensemble de ces techniques permet d'utiliser le dispositif d'orientation de la ligne de visée selon l'invention en pointage et en stabilisation. La très haute bande passante d'orientation des équipages mobiles en site et en gisement permet de proposer l'architecture décrite ci-dessus et le principe de la stabilisation inertielle. Cela résulte du fait que, dans le dispositif d'orientation proposé par l'invention, la motorisation piézoélectrique est pleinement exploitée pour contrôler la stabilisation inertielle de la ligne de visée, y compris aux hautes fréquences. En effet, alors que les dispositifs d'orientation « deux axes » traditionnels reposent sur l'inertie de la charge optronique ou des miroirs de stabilisation pour traiter les hautes fréquences du spectre de déstabilisation, le dispositif d'orientation selon l'invention permet de les compenser activement.

Il est bien connu qu'un moteur rotatif piézoélectrique à onde progressive est bloqué à l'état de repos par frottement sec lorsque les secteurs d'excitation de l'anneau piézoélectrique ne sont pas alimentés) et qu'il présente un frein lorsqu'il est alimenté (frottement fluide). Par ailleurs, il présente des caractéristiques de couple importantes, qui permettent d'atteindre des accélérations angulaires de l'ordre de 3000 rad/s², comme déjà dit.

Le dispositif d'orientation selon l'invention met en oeuvre au moins un, et de préférence deux moteurs rotatifs piézoélectriques, en tirant parti de leurs caractéristiques de couple pour pallier à l'état bloqué ou frein. Chacun des deux moteurs piézoélectriques peut être utilisé dans sa pleine bande passante, non limitée par l'asservissement, pour compenser les hautes fréquences de déstabilisation, sans utiliser l'aspect inertiel de la charge optronique ou des miroirs ou du bi-prisme 4. Une conséquence de ce choix, propre à l'invention, est de pouvoir réaliser une tourelle d'orientation très compacte. Son agencement mécanique est réalisé de manière à minimiser les inerties des pièces en mouvement, ainsi que le volume et la masse totale de la tourelle d'orientation. Les équipages mobiles en site et en gisement sont équilibrés, c'est-à-dire que leur centre de gravité se trouve sur l'axe de gisement, pour l'équipage mobile en gisement, et très sensiblement sur l'intersection de l'axe de site et de l'axe de gisement pour l'équipage mobile en site, de manière à éviter des mouvements de rotation de la ligne de visée induits par les accélérations linéaires sur les balourds.

Enfin, la boucle d'asservissement en vitesse et/ou position peut intégrer avantageusement, comme déjà mentionné ci-dessus, un gyromètre pour la stabilisation inertielle de la ligne de visée, ainsi qu'un dispositif de stabilisation fine pour contourner l'inconvénient connu de la stabilisation des tourelles « deux axes » au Nadir et compenser les mouvements résiduels de la ligne de visée au sortir de la tourelle d'orientation.

En plus des avantages précités, la tourelle d'orientation selon l'invention permet une compensation des vibrations, par une méthode active, uniquement grâce à la bande passante plus grande de l'asservissement aux hautes fréquences, du fait de la pleine exploitation des performances des moteurs piézoélectriques qui est rendue possible par l'architecture opto-mécanique originale en terme d'asservissement inertiel de la ligne de visée dans les hautes fréquences, qui est procuré par la tourelle d'orientation selon l'invention.

Il est ainsi avantageusement obtenu une tourelle d'orientation simplifiée et véloce à faisceau optique, présentant de trois à quatre fois plus de couple par unité de masse par rapport aux moteurs couples électromagnétiques équivalents connus de l'art antérieur, permettant de ce fait de minimiser l'impact de la masse des moteurs eux-mêmes sur les inerties de la plate-forme optronique, d'économiser un dispositif de réduction de vitesse/augmentation de couple nécessaire dans les dispositifs selon l'art antérieur, et avec un pilotage rapide et précis du faisceau optique, le plus petit déplacement de chaque moteur 13 ou 14 étant estimé à quelques microradians pour un moteur de 50 mm de diamètre environ.

Il convient en outre de noter que la tourelle d'orientation/stabilisation de faisceau selon l'invention n'est pas seulement bien adaptée à tous les systèmes de pointage de faisceau pour les applications terrestres, navales et aéroportées, mais également aux systèmes de veille optronique panoramique, lorsque 1a tourelle selon l'invention est utilisée comme tourelle de balayage panoramique, en utilisant le principe dit de « Step and Stare » sans dispositif de contra-rotation particulier additionnel.

En effet, avec un dispositif opto-mécanique selon l'invention, un système de « Step and Stare » sans lame de contra-rotation et sans bloc de stabilisation peut être réalisé, dans lequel toutes les fonctions sont remplies par le seul dispositif opto-mécanique d'orientation-stabilisation et contra-rotation de la ligne de visée, conforme à la présente invention.

Dans le cadre de la sécurité aérienne, la mise au point de systèmes de détection et d'évitement automatiques requiert le développement de tourelles opto-mécaniques capables d'orienter une ligne de visée optique (imagerie et laser) dans un espace panoramique couvrant 360° en gisement et au moins une trentaine de degrés en site. Dans un tel système de détection et d'évitement automatique, le dispositif de veille, permettant de détecter les aéronefs aux alentours de la plateforme d'emport et de les poursuivre dans l'espace aérien de proximité, est principalement constitué d'une tourelle opto-mécanique de balayage panoramique, associée à une optronique de poursuite passive, dotée de la fonction de télémétrie, d'un laser ainsi que d'un boitier électronique de contrôle. La tourelle opto-mécanique d'un tel dispositif de veille doit répondre aux spécifications en termes de :
- couverture spatiale : l'architecture opto-mécanique du dispositif de veille peut être basée sur un bi-prisme, une tête à deux miroirs ou une tête à quatre miroirs, piloté(e) en site et en gisement, qui confère à la tourelle une couverture spatiale supérieure à 2 π sr. permettant de couvrir au moins un champ de 30° en site centré sur l'horizon et compensable d'au moins ± 45° en site (pour garder le plan de veille horizontal), et de 360° en gisement ; et
- vélocité d'adressage spatial (20° de ligne de visée en gisement en un temps inférieur à 50ms) : le déplacement d'une prise d'image à une autre est le contributeur principal au temps de balayage panoramique, car le temps moyen d'intégration optique pour la capture d'images est de l'ordre de 1 ms tandis que le temps de ralliement d'une position d'image à celle consécutive pour couvrir les 360° panoramiques se compte en dizaines de millisecondes, et, par ailleurs, la cadence de rafraichissement panoramique visée est de l'ordre de 1 à 2 Hz.

L'obtention d'une telle performance de vélocité peut être assurée à l'aide d'une tourelle d'orientation selon l'invention, bénéficiant simultanément d'une faible inertie des pièces opto-mécaniques et d'une motorisation piézoélectrique à onde progressive qui procure un couple massique très élevé, comme déjà mentionné ci-dessus.
En outre, un dispositif de veille selon l'état de la technique remplit la fonction de « Step and Stare » de la ligne de visée à l'aide d'une tourelle d'orientation tournant à vitesse constante, dont le mouvement induit de la ligne de visée est compensé par un dispositif de contra-rotation (lame ou miroir à mouvement alternatif) tournant en sens inverse et à même vitesse équivalente optique que la tourelle d'orientation, de manière à obtenir la stabilité inertielle de la ligne de visée pendant le temps d'intégration de l'image.

L'avantage de la tourelle d'orientation selon la présente invention est qu'elle peut se passer de ce dispositif de contra-rotation, grâce à l'utilisation de la motorisation piézoélectrique en entrainement direct sur l'orientation de la ligne de visée du bloc optique 4, en combinaison avec les grandes capacités de couple de ce type de motorisation.

Enfin, concernant les autres spécifications, en termes de stabilisation inertielle et de compatibilité avec les bandes spectrales de l'optronique, elles sont communes aux applications de veille panoramique par balayage et de poursuite, passive ou active, par pointage, et sont donc également satisfaites par la tourelle orientable selon l'invention, pour les raisons déjà présentées ci-dessus.

Dans l'application à la veille panoramique par balayage, l'équipage mobile en site du dispositif d'orientation selon l'invention est asservi en position ou en vitesse dans le repère inertiel et permet de passer un champ de l'ordre de 30° au moins et de le centrer sur l'horizon avec des mouvements de la plate forme de l'ordre de ± 30° au moins, et l'équipage mobile en gisement permet la mise en mouvement de rotation de la fourche de 360° autour de l'axe de gisement YY.

La tourelle d'orientation selon l'invention est donc particulièrement bien adaptée pour fonctionner en tourelle de balayage panoramique de faisceau pour un dispositif de veille, en application terrestre, navale ou aéroportée. Dans cette application également, elle permet l'asservissement inertiel de la ligne de visée dans les hautes fréquences, grâce à la pleine exploitation des performances des moteurs piézoélectriques 13 et 14. Dans cette application, les avantages de la tourelle d'orientation selon l'invention en terme de minimisation du volume, de la masse et de la consommation électrique ainsi que des effets néfastes de trainée et de réduction de rayon d'action, et de la compensation des vibrations par une méthode active, uniquement grâce à la bande passante plus grande de l'asservissement aux hautes fréquences, sont conservés et s'ajoutent aux avantages spécifiques à cette application de veille par balayage, à savoir la simplification de la fonction de balayage en mode « Step and Stare » par suppression du dispositif de contra-rotation, grâce aux performances de couple de la motorisation piézoélectrique associées aux lois de commande spécifiques précitées des moteurs 13 et 14 de la tourelle selon l'invention, ainsi qu'une grande vélocité d'orientation, pour atteindre 20° de rotation de la ligne de visée en moins de 50 ms, permettant ainsi d'atteindre des cadences de rafraichissement de balayage panoramique de l'ordre de 1 à 2 Hz pour 360°de champs en gisement, et un adressage spatial d'au moins ± 45° en site avec un champ d'au moins 30° en site.

Il est bien entendu que le principe de l'invention s'applique également quand un seul des deux moteurs 13 et 14 est un moteur piézoélectrique à onde progressive.

De manière avantageuse, les moteurs piézoélectriques 13 et 14 à onde progressive utilisés dans la tourelle d'orientation selon l'invention peuvent aussi être du type décrit et illustré dans la demande de brevet FR 06 06439, dans laquelle le stator d'un moteur est excité par deux anneaux coaxiaux d'éléments piézoélectriques appliqués chacun contre l'une respectivement de deux faces radiales opposées du stator annulaire, et à laquelle on se reportera pour davantage de précisions à ce sujet.

## Revendications

1. Dispositif d'orientation du type dit tourelle ou tête d'orientation « deux axes », pour orienter au moins un ensemble de transmission (4) d'au moins un faisceau optique et/ou électro-magnétique en site et/ou en gisement, par rotation dudit ensemble de transmission (4) autour respectivement d'un axe de site (XX) et/ou d'un axe de gisement (YY), dispositif dans lequel ledit ensemble de transmission (4) est monté pivotant sur une fourche (2) autour d'un premier axe, dit axe de site (XX), et apte à être entrainé en rotation autour dudit axe de site par un premier moteur (13) supporté par ladite fourche (2), laquelle fourche (2) est montée pivotante sur une embase (1) autour d'un second axe, dit axe de gisement (YY), perpendiculaire à l'axe de site (XX), et apte à être entrainée en rotation autour dudit axe de gisement par un second moteur (14) supporté par ladite embase (1),
**caractérisé en ce que** le premier moteur (13) est un moteur rotatif piézoélectrique à onde progressive comprenant :
- un stator comportant une couronne statorique dentée (15) de section circulaire, supportée par ladite fourche (2),
- un rotor comportant un patin rotorique annulaire (19) de section circulaire, sensiblement coaxial à ladite couronne statorique dentée (15) autour de l'axe de site (XX), et en appui axial contre ladite couronne sous un effort de précontrainte, ledit patin rotorique annulaire (19) étant solidaire en rotation d'un organe mené (10), ledit organe mené étant un premier support (10) dudit ensemble de transmission (4) dont il est solidaire et entrainé en rotation autour de l'axe de site (XX) par ledit premier moteur, ledit ensemble de transmission (4) étant monté tourillonnant par ledit premier support (10) autour de l'axe de site (XX), sur une première (12) de deux branches (12, 11) de ladite fourche (2) entre lesquelles ledit ensemble de transmission (4) pivote, et
- au moins un anneau piézoélectrique (17) à secteurs d'excitation de ladite couronne statorique dentée (15), ledit anneau (17) étant également sensiblement coaxial à ladite couronne (15) autour de l'axe de site (XX) et appliqué contre une face radiale de ladite couronne (15), de sorte à pouvoir exciter ladite couronne statorique (15) et à provoquer le déplacement rotatif du rotor (19) lorsque lesdits secteurs d'excitation dudit anneau piézoélectrique (17) sont alimentés en courant électrique approprié,
dans lequel dispositif d'orientation :
SOIT le patin rotorique annulaire (19) du premier moteur (13) est directement intégré audit premier support (10) de l'ensemble de transmission (4), en étant réalisé en saillie coaxialement autour de l'axe de site (XX) sur une face radiale dudit premier support (10) qui est en vis-à-vis de la couronne statorique (15) dudit premier moteur (13), laquelle couronne (15) étant supportée par ladite première branche (12) de la fourche (2),
SOIT le patin rotorique annulaire (19) du premier moteur (13) est directement intégré à une extrémité axiale d'un arbre (25) d'entraînement en site, sensiblement coaxial audit patin rotorique (19) autour de l'axe de site (XX) et solidaire en rotation dudit premier support (10) de l'ensemble de transmission (4) autour dudit axe de site (XX).

2. Dispositif d'orientation selon la revendication 1, **caractérisé en ce que** le deuxième moteur (14) est aussi un moteur rotatif piézoélectrique à onde progressive.

3. Dispositif d'orientation selon l'une quelconque des revendications 1 ou 2, **caractérisé en ce que** ledit ensemble de transmission (4) est fixé entre ledit premier support (10) et un second support (9), qui est monté tourillonnant autour de l'axe de site (XX) dans la seconde branche (11) de ladite fourche (2), par l'intermédiaire d'un montage glissant axialement qui accouple l'ensemble de transmission (4) à un ensemble codeur (27) en site, apte à mesurer la rotation de l'ensemble de transmission (4) autour de l'axe de site (XX).

4. Dispositif d'orientation selon la revendication 3, **caractérisé en ce que** ledit second support (9) de l'ensemble de transmission (4) se prolonge, selon l'axe de site (XX), par un tourillon cylindrique (31) monté rotatif autour de l'axe de site (XX) et axialement glissant dans un alésage coaxial ménagé dans le moyeu d'un disque (29) de section circulaire guidé en rotation autour de l'axe de site (XX) dans la seconde branche (11) de ladite fourche (2) par au moins un roulement (30), ledit moyeu se prolongeant également, coaxialement autour de l'axe de site (XX), par un embout (32) cylindrique engagé coaxialement dans l'ensemble codeur (27) en site, comportant de préférence un codeur optique monté dans la seconde branche (11) de ladite fourche (2), ledit disque (29) étant lié en rotation audit second support (9) par des moyens (33) de blocage en rotation autour dudit axe de site (XX).

5. Dispositif d'orientation selon l'une quelconque des revendications précédentes, **caractérisé en ce que** ladite couronne statorique dentée (15) du stator et, éventuellement, ledit au moins un anneau piézoélectrique (17) du premier moteur (13) sont supportés, coaxialement autour de l'axe de site (XX), en saillie sur une face radiale, tournée vers ledit ensemble de transmission (4), d'une bride (24) fixée à ladite première branche (12) de la fourche (2), pour supporter ledit premier moteur (13).

6. Dispositif d'orientation selon l'une quelconque des revendications précédentes, **caractérisé en ce que** ledit patin rotorique annulaire (20) du premier moteur (13) ainsi que le ou les organes (25) solidaires en rotation dudit patin traversent des mécanismes à roulement (26) supportés par ladite fourche (2).

7. Dispositif d'orientation selon l'une quelconque des revendications précédentes, **caractérisé en ce que** l'ensemble de transmission est un bloc optique compatible laser, comportant un bi-prisme (4) ou un ensemble d'au moins deux miroirs.

8. Dispositif d'orientation du type dit tourelle ou tête d'orientation « deux axes », pour orienter au moins un ensemble de transmission (4) d'au moins un faisceau optique et/ou électro-magnétique en site et/ou en gisement, par rotation dudit ensemble de transmission (4) autour respectivement d'un axe de site (XX) et/ou d'un axe de gisement (YY), dispositif dans lequel ledit ensemble de transmission (4) est monté pivotant sur une fourche (2) autour d'un premier axe, dit axe de site (XX), et apte à être entrainé en rotation autour dudit axe de site par un premier moteur (13) supporté par ladite fourche (2), laquelle fourche (2) est montée pivotante sur une embase (1) autour d'un second axe, dit axe de gisement (YY), perpendiculaire à l'axe de site(XX), et apte à être entrainée en rotation autour dudit axe de gisement par un second moteur (14) supporté par ladite embase (1),
**caractérisé en ce que** le second (14) moteur est un moteur rotatif piézoélectrique à onde progressive comprenant :
- un stator comportant une couronne statorique dentée (16) de section circulaire, supportée par ladite embase (1),
- un rotor comportant un patin rotorique annulaire (20) de section circulaire, sensiblement coaxial à ladite couronne statorique dentée (16) autour de l'axe de gisement (YY), et en appui axial contre ladite couronne sous un effort de précontrainte, ledit patin rotorique annulaire (20) étant solidaire en rotation d'un organe mené (36), ledit organe mené (36) étant un plateau support (36) de la fourche (2) dont il est solidaire et entrainé en rotation autour de l'axe de gisement (YY) par ledit deuxième moteur (14), l'organe mené (36) solidaire de la fourche (2) est agencé en disque annulaire par lequel la fourche (2) est montée tourillonnante autour de l'axe de gisement (YY) sur une plaque annulaire (5) de l'embase (1), le disque annulaire (36) de la fourche (2) et la plaque annulaire (5) de l'embase (1) présentent chacun un orifice central (37, 6), lesdits orifices centraux (37, 6) autorisant le passage d'au moins un faisceau et/ou de moyens d'émission et/ou de réception d'au moins un faisceau vers ledit ensemble de transmission (4) et/ou en provenance de ce dernier, et
- au moins un anneau piézoélectrique (18) à secteurs d'excitation de ladite couronne statorique dentée (16), ledit anneau (18) étant également sensiblement coaxial à ladite couronne (16) autour de l'axe de gisement (YY) correspondant et appliqué contre une face radiale de ladite couronne (16), de sorte à pouvoir exciter ladite couronne statorique (16) et à provoquer le déplacement rotatif du rotor (20) lorsque lesdits secteurs d'excitation dudit anneau piézoélectrique (18) sont alimentés en courant électrique approprié,
dans lequel dispositif d'orientation :
SOIT ledit le patin rotorique annulaire (20') du second moteur (14) est directement intégré audit disque annulaire (36) de la fourche (2) en étant réalisé en saillie sur la face radiale dudit disque annulaire (36) qui est tournée du côté de l'embase (1),
SOIT le patin rotorique annulaire (20) du second moteur (14) est directement intégré à une extrémité axiale d'un arbre (35) d'entrainement en gisement qui est tubulaire, solidaire dudit disque annulaire (36) de la fourche (2), et débouche, selon l'axe de gisement (YY), en regard dudit ensemble de transmission (4), au travers de l'orifice central (37) dudit disque annulaire (36), pour le passage d'au moins un faisceau et/ou de moyens d'émission et/ou de réception d'au moins un faisceau vers l'ensemble de transmission (4), et/ou en provenance de ce dernier.

9. Dispositif d'orientation selon la revendication 8, **caractérisé en ce que** ladite couronne statorique dentée (16) du stator et, éventuellement, ledit au moins un anneau piézoélectrique (18) du second moteur (14) sont supportés en saillie, coaxialement autour de l'axe de gisement (YY), sur une face radiale de ladite plaque annulaire (5) de l'embase (1) qui est tournée vers ladite fourche (2).

10. Dispositif d'orientation selon l'une quelconque des revendications 8 ou 9, **caractérisé en ce que** le second moteur (14) est couplé sur l'embase (1) à un ensemble codeur (41) en gisement, apte à mesurer la rotation angulaire de ladite fourche (2) autour de l'axe de gisement (YY).

11. Dispositif d'orientation selon la revendication 10, **caractérisé en ce que** le second moteur (14) et l'ensemble codeur (41) en gisement sont associés dans un ensemble moteur-codeur monté sur l'embase (1) de sorte que le second moteur (14) et le codeur (41) en gisement sont situés sensiblement de part et d'autre de ladite plaque annulaire (5) de l'embase (1).

12. Dispositif d'orientation selon l'une quelconque des revendications 8 à 11, **caractérisé en ce que** ledit patin rotorique annulaire (20) du deuxième moteur (14) ainsi que le ou les organes (35) solidaires en rotation dudit patin traversent des mécanismes à roulement (38) supportés par ladite embase (1).

13. Dispositif d'orientation selon l'une quelconque des revendications 8 à 12, **caractérisé en ce que** l'ensemble de transmission est un bloc optique compatible laser, comportant un bi-prisme (4) ou un ensemble d'au moins deux miroirs.

14. Dispositif d'orientation selon l'une quelconque des revendications 8 à 13, **caractérisé en ce que** le premier moteur (13) est aussi un moteur rotatif piézoélectrique à onde progressive.

15. Dispositif d'orientation selon la revendication 14, **caractérisé en ce que** le premier moteur (13) comprend :
- un stator comportant une couronne statorique dentée (15) de section circulaire, supportée par ladite fourche (2),
- un rotor comportant un patin rotorique annulaire (19) de section circulaire, sensiblement coaxial à ladite couronne statorique dentée (15) autour de l'axe de site (XX), et en appui axial contre ladite couronne sous un effort de précontrainte, ledit patin rotorique annulaire (19) étant solidaire en rotation d'un organe mené (10), ledit organe mené étant un premier support (10) dudit ensemble de transmission (4) dont il est solidaire et entrainé en rotation autour de l'axe de site (XX) par ledit premier moteur, ledit ensemble de transmission (4) étant monté tourillonnant par ledit premier support (10) autour de l'axe de site (XX), sur une première (12) de deux branches (12, 11) de ladite fourche (2) entre lesquelles ledit ensemble de transmission (4) pivote, et
- au moins un anneau piézoélectrique (17) à secteurs d'excitation de ladite couronne statorique dentée (15), ledit anneau (17) étant également sensiblement coaxial à ladite couronne (15) autour de l'axe de site (XX) et appliqué contre une face radiale de ladite couronne (15), de sorte à pouvoir exciter ladite couronne statorique (15) et à provoquer le déplacement rotatif du rotor (19) lorsque lesdits secteurs d'excitation dudit anneau piézoélectrique (17) sont alimentés en courant électrique approprié,
dans lequel dispositif d'orientation :
SOIT le patin rotorique annulaire (19) du premier moteur (13) est directement intégré audit premier support (10) de l'ensemble de transmission (4), en étant réalisé en saillie coaxialement autour de l'axe de site (XX) sur une face radiale dudit premier support (10) qui est en vis-à-vis de la couronne statorique (15) dudit premier moteur (13), laquelle couronne (15) étant supportée par ladite première branche (12) de la fourche (2),
SOIT le patin rotorique annulaire (19) du premier moteur (13) est directement intégré à une extrémité axiale d'un arbre (25) d'entraînement en site, sensiblement coaxial audit patin rotorique (19) autour de l'axe de site (XX) et solidaire en rotation dudit premier support (10) de l'ensemble de transmission (4) autour dudit axe de site (XX).

## Claims

1. Orientation device of what is called "two axis" orientation head or turret type, for orienting at least one transmission assembly (4) for transmitting at least one optical and/or electromagnetic beam in elevation and/or in bearing, by rotation of said transmission assembly (4) about an elevation axis (XX) and/or a bearing axis (YY) respectively, in which device said transmission assembly (4) is mounted so as to pivot on a fork (2) about a first axis, called the elevation axis (XX), and capable of being rotated about said elevation axis by a first motor (13) supported by said fork (2), which fork is mounted so as to pivot on a base (1) about a second axis, called the bearing axis (YY), perpendicular to the elevation axis (XX), and capable of being rotated about said bearing axis by a second motor (14) supported by said base (1),
**characterized in that** the first motor (13) is a travelling-wave piezoelectric rotary motor comprising:
- a stator comprising a cogged stator ring (15) of circular cross section, supported by said fork (2);
- a rotor comprising an annular rotor slider (19) of circular cross section, substantially coaxial with said cogged stator ring (15) about the elevation axis (XX) and being pressed axially against said ring by a prestressing force, said annular rotor slider (19) being made to rotate as one with a driven member (10), said driven member being a first support (10) for said transmission assembly (4), with which it is integral and driven in rotation about the elevation axis (XX) by said first motor, said transmission assembly (4) being mounted so as to swivel via said first support (10) about the elevation axis (XX) on a first (12) of two arms (12, 11) of said fork (2), between which arms said transmission assembly pivots, and
- at least one piezoelectric ring (17) with excitation sectors for exciting said cogged stator ring (15), said ring (17) also being substantially coaxial with said ring (15) about the elevation axis (XX) and applied against a radial face of said ring (15), so as to be able to excite said stator ring (15) and to cause the rotary displacement of the rotor (19) when said excitation sectors of said piezoelectric ring (17) are supplied with an appropriate electrical current, in which orientation device :
- either the annular rotor slider (19) of the first motor (13) is directly integrated into said first support (10) for the transmission assembly (4), being produced so as to project coaxially about the elevation axis (XX) on a radial face of said first support (10) that faces the stator ring (15) of said first motor (13), which ring (15) is supported by said first arm (12) of the fork (2),
- or the annular rotor slider (19) of the first motor (13) is directly integrated into an axial end of an elevation drive shaft (25) substantially coaxial with said rotor slider (19) about the elevation axis (XX) and made to rotate as one with said first support (10) for the transmission assembly (4) about said elevation axis (XX).

2. Orientation device according to Claim 1, **characterized in that** the second motor (14) is also a travelling wave piezoelectric rotary motor.

3. Orientation device according to any one of Claims 1 and 2, **characterized in that** said transmission assembly (4) is fastened between said first support (10) and a second support (9), which is mounted so as to swivel about the elevation axis (XX) in the second arm (11) of said fork (2) by means of an axially sliding arrangement that couples the transmission assembly (4) to an elevation encoder assembly (27) capable of measuring the rotation of the transmission assembly (4) about the elevation axis (XX).

4. Orientation device according to Claim 3, **characterized in that** said second support (9) for the transmission assembly (4) is extended, along the elevation axis (XX), by a cylindrical trunnion (31) mounted so as to rotate about the elevation axis (XX) and to slide axially in a coaxial bore made in the hub of a disc (29) of circular cross section rotationally guided about the elevation axis (XX) in the second arm (11) of said fork (2) by at least one rolling bearing (30), said hub also being extended, coaxially about the elevation axis (XX), by a cylindrical end-piece (32) engaged coaxially in the elevation encoder assembly (27), preferably comprising an optical encoder mounted in the second arm (11) of said fork (2), said disc (29) being rotationally linked to said second support (9) by means (33) for preventing rotation about said elevation axis (XX).

5. Orientation device according to any one of the preceding Claims, **characterized in that** said cogged stator ring (15) of the stator and, optionally, said at least one piezoelectric ring (17) of the first motor (13) are supported, coaxially about the elevation axis (XX), projecting on a radial face, turned toward said transmission assembly (4), of a flange (24) fastened to said first arm (12) of the fork (2) in order to support said first motor (13).

6. Orientation device according to any one of the preceding Claims, **characterized in that** said annular rotor slider (20) of the first motor (13)and the member or members (25) made to rotate as one with said slider pass through rolling-bearing mechanisms (26) supported by said fork (2).

7. Orientation device according to any one of the preceding Claims, **characterized in that** the transmission assembly is a laser-compatible optical block comprising a biprism (4) or an assembly of at least two mirrors

8. Orientation device of what is called "two axis" orientation head or turret type, for orienting at least one transmission assembly (4) for transmitting at least one optical and/or electromagnetic beam in elevation and/or in bearing, by rotation of said transmission assembly (4) about an elevation axis (XX) and/or a bearing axis (YY) respectively, in which device said transmission assembly (4) is mounted so as to pivot on a fork (2) about a first axis, called the elevation axis (XX), and capable of being rotated about said elevation axis by a first motor (13) supported by said fork (2), which fork is mounted so as to pivot on a base (1) about a second axis, called the bearing axis (YY), perpendicular to the elevation axis (XX), and capable of being rotated about said bearing axis by a second motor (14) supported by said base (1),
**characterized in that** said second motor (14) is a travelling-wave piezoelectric rotary motor comprising:
- a stator comprising a cogged stator ring (16) of circular cross section, supported by said base (1);
- a rotor comprising an annular rotor slider (20) of circular cross section, substantially coaxial with said cogged stator ring (16) about the bearing axis (YY) and being pressed axially against said ring by a prestressing force, said annular rotor slider (20) being made to rotate as one with a driven member (36) said driven member (36) being a support-plate (36) of the fork (2), with which it is integral and rotated about the bearing axis (YY) by said second motor (14), the driven member (36) integral with the fork (2) being arranged in the form of an annular disc via which the fork (2) is mounted so as to swivel about the bearing axis (YY) on an annular plate (5) of the base (1), the annular disc (36) of the fork (2) and the annular plate (5) of the base (1) each having a central orifice (37, 6), said central orifice (37, 6) allowing passage of at least one beam and/or means for emitting and/or receiving at least one beam towards said transmission assembly (4) and/or coming from the latter, and
- at least one piezoelectric ring (18) with excitation sectors for exciting said cogged stator ring (16), said ring (18) also being substantially coaxial with said ring (16) about the corresponding bearing axis (YY) and applied against a radial face of said ring (16) so as to be able to excite said stator ring (16) and to cause the rotary displacement of the rotor (20) when said excitation sectors of said piezoelectric ring (18) are supplied with an appropriate electrical current, in which orientation device:
- either said annular rotor slider (20') of the second motor is directly integrated into said annular disc (36) of the fork (2) by projecting on that radial face of said annular disc (36) which is turned towards the base (1),
- or the annular rotor slider (20) of the second motor is directly integrated into an axial end of a bearing drive shaft (35), which is tubular and integral with said annular disc (36) of the fork (2) and emerges, along the bearing axis (YY), facing said transmission assembly (4), through the central orifice (37) of said annular disc (36) for passage of at least one beam and/or of means for emitting and/or receiving at least one beam towards the transmission assembly (4) and/or coming from the latter.

9. Orientation device according to Claim 8, **characterized in that** said cogged stator ring (16) of the stator and, optionally, said at least one piezoelectric ring (18) of the second motor (14) are supported so as to project, coaxially about the bearing axis (YY), on a radial face of said annular plate (5) of the base (1) which is turned towards said fork (2).

10. Orientation device according to any one of Claims 8 and 9, **characterized in that** the second motor (14) is coupled on the base (1) to a bearing encoder assembly (41) capable of measuring the angular rotation of said fork (2) about the bearing axis (YY).

11. Orientation device according to Claim 10, **characterized in that** the second motor (14) and the bearing encoder assembly (41) are associated in a motor/encoder assembly mounted on the base (1) so that the second motor (14) and the bearing encoder (41) are located substantially on either side of said annular plate (5) of the base (1).

12. Orientation device according to any one of Claims 8 to 11, **characterized in that** said annular rotor slider (20) of the second motor (14) and the member or members (35) made to rotate as one with said slider pass through rolling-bearing mechanisms (38) supported by said base (1).

13. Orientation device according to any one of Claims 8 to 12, **characterized in that** the transmission assembly is a laser-compatible optical block comprising a biprism (4) or an assembly of at least two mirrors.

14. Orientation device according to any one of Claims 8-13, **characterized in that** the first motor (13) is also a travelling wave piezoelectric rotary motor.

15. Orientation device according to claim 14, **characterized in that** the first motor (13) comprises:
- a stator comprising a cogged stator ring (15) of circular cross section, supported by said fork (2);
- a rotor comprising an annular rotor slider (19) of circular cross section, substantially coaxial with said cogged stator ring (15) about the elevation axis (XX) and being pressed axially against said ring by a prestressing force, said annular rotor slider (19) being made to rotate as one with a driven member (10), said driven member being a first support (10) for said transmission assembly, with which it is integral and rotated about the elevation axis (XX) by said first motor, said transmission assembly (4) being mounted so as to swivel via said first support (10) about the elevation axis (XX) on a first (12) of two arms (12, 11) of said fork (2), between which arms said transmission assembly (4) pivots, and
- at least one piezoelectric ring (17) with excitation sectors for exciting said cogged stator ring (15), said ring (17) also being substantially coaxial with said ring (15) about the elevation axis (XX) and applied against a radial face of said ring (15) so as to be able to excite said stator ring (15) and to cause the rotary displacement of the rotor (19) when said excitation sectors of said piezoelectric ring (17) are supplied with an appropriate electrical current, in which orientation device :
- either the annular rotor slider (19) of the first motor (13) is directly integrated into said first support (10) for the transmission assembly (4), being produced so as to project coaxially about the elevation axis (XX) on a radial face of said first support (10) that faces the stator ring (15) of said first motor (13), which ring (15) being supported by said first arm (12) of the fork (2),
- or the annular rotor slider (19) of the first motor (13) is directly integrated into an axial end of an elevation drive shaft (25) substantially coaxial with said rotor slider (19) about the elevation axis (XX) and made to rotate as one with said first support (10) for the transmission assembly (4) about said elevation axis (XX).

## Patentansprüche

1. Ausrichtungsvorrichtung vom Turm oder Ausrichtungskopf für zwei Achsen genannten Typ, um wenigstens eine Übertragungsanordnung (4) von wenigstens einem optischen oder/und elektromagnetischen Strahl bezüglich Höhenrichtung oder/und Seitenpeilungsrichtung auszurichten, durch Drehung der Übertragungsanordnung (4) um jeweils eine Höhenrichtungsachse (XX) oder/und eine Seitenpeilungsachse (YY), Vorrichtung, wobei die Übertragungsanordnung (4) um eine als Höhenrichtungsachse (XX) bezeichnete erste Achse schwenkbar an einer Gabel (2) angebracht ist, und dazu geeignet ist, zu einer Drehung um die Höhenrichtungsachse durch einen ersten Motor (13) angetrieben zu werden, der durch die Gabel (2) gelagert ist, wobei die Gabel (2) um eine als Seitenpeilungsachse (YY) bezeichnete zweite Achse senkrecht zur Höhenrichtungsachse (XX) schwenkbar an einem Sockel (1) angebracht und dazu geeignet ist, von einem durch den Sockel (1) gelagerten zweiten Motor (14) zu einer Drehung um die Seitenpeilungsachse angetrieben zu werden, **dadurch gekennzeichnet, dass** der erste Motor (13) ein piezoelektrischer Wanderwellen-Rotationsmotor ist, welcher umfasst:
- einen Stator, umfassend einen gezahnten Statorkranz (15) mit kreisförmigem Querschnitt, der von der Gabel (2) gelagert ist,
- einen Rotor, umfassend einen ringförmigen Rotoranker (19) mit kreisförmigem Querschnitt, im Wesentlichen koaxial zu dem gezahnten Statorkranz (15) um die Höhenrichtungsachse (XX) herum, und axial gegen den Kranz unter einer Vorspannkraft abgestützt, wobei der ringförmige Rotoranker (19) drehfest mit einem geführten Element (10) verbunden ist, welches geführte Element eine erste Halterung (10) der Übertragungsanordnung (4) ist, mit der es verbunden ist, und das von dem ersten Motor zu einer Drehung um die Höhenrichtungsachse (XX) angetrieben wird, wobei die Übertragungsanordnung (4) durch die erste Halterung (10) drehbar um die Höhenrichtungsachse (XX) an einem ersten (12) von zwei Armen (12, 11) der Gabel (2) angebracht ist, zwischen denen die Übertragungsanordnung (4) schwenkt, und
- wenigstens einen piezoelektrischen Ring (17) mit Anregungszonen für den gezahnten Statorkranz (15), wobei der Ring (17) ebenfalls im Wesentlichen koaxial zu dem Kranz (15) um die Höhenrichtungsachse (XX) herum ist und gegen eine radiale Fläche des Kranzes (15) angewendet wird, um den Statorkranz (15) anregen zu können und die Dreh-Verlagerung des Rotors (19) herbeizuführen, wenn die Anregungszonen des piezoelektrischen Rings (17) mit einem geeigneten elektrischen Strom versorgt werden,
wobei bei der Ausrichtungsvorrichtung:
ENTWEDER der ringförmige Rotoranker (19) des ersten Motors (13) direkt in die erste Halterung (10) der Übertragungsanordnung (4) integriert ist, wobei er koaxial um die Höhenrichtungsachse (XX) an einer radialen Fläche der ersten Halterung (10) hervorstehend ausgebildet ist, die gegenüber des Statorkranzes (15) des ersten Motors (13) liegt, wobei der Kranz (15) von dem ersten Arm (12) der Gabel (2) gelagert ist,
ODER der ringförmige Rotoranker (19) des ersten Motors (13) direkt in ein axiales Ende einer Welle (25) zum Antrieb bezüglich der Höhenrichtung integriert ist, die im Wesentlichen koaxial zu dem Rotoranker (19) um die Höhenrichtungsachse (XX) ist und drehfest mit der ersten Halterung (10) der Übertragungsanordnung (4) um die Höhenrichtungsachse (XX) verbunden ist.

2. Ausrichtungsvorrichtung nach Anspruch 1, **dadurch gekennzeichnet, dass** der zweite Motor (14) ebenfalls ein piezoelektrischer Wanderwellen-Rotationsmotor ist.

3. Ausrichtungsvorrichtung nach einem der Ansprüche 1 oder 2, **dadurch gekennzeichnet, dass** die Übertragungsanordnung (4) zwischen der ersten Halterung (10) und einer zweiten Halterung (9) befestigt ist, die drehbar um die Höhenrichtungsachse (XX) an dem zweiten Arm (11) der Gabel (2) befestigt ist, vermittels einer axial verschiebbaren Anordnung, die die Übertragungsanordnung (4) mit einer Höhenrichtungs-Kodierungsanordnung (27) koppelt, die dazu geeignet ist, die Drehung der Übertragungsanordnung (4) um die Höhenrichtungsachse (XX) zu messen.

4. Ausrichtungsvorrichtung nach Anspruch 3, **dadurch gekennzeichnet, dass** die zweite Halterung (9) der Übertragungsanordnung (4) sich entlang der Höhenrichtungsachse (XX) durch einen zylindrischen Lagerzapfen (31) verlängert, der drehbar um die Höhenrichtungsachse (XX) und axial verschiebbar in einer koaxialen Bohrung angebracht ist, die in der Nabe einer Scheibe (29) mit kreisförmigem Querschnitt ausgeführt ist, welche zur Drehung um die Höhenrichtungsachse (XX) in dem zweiten Arm (11) der Gabel (2) durch wenigstens ein Lager (30) geführt ist, wobei die Nabe sich ebenfalls koaxial um die Höhenrichtungsachse (XX) durch einen zylindrischen Ansatz (32) verlängert, der koaxial in die Höhenrichtungs-Kodierungsandordnung (27) eingreift, umfassend vorzugsweise einen optischen Kodierer, der in dem zweiten Arm (11) der Gabel (2) angebracht ist, wobei die Scheibe (29) rotationsmäßig mit der zweiten Halterung (9) durch Blockierungsmittel (33) zur Drehung um die Höhenrichtungsachse (XX) verbunden ist.

5. Ausrichtungsvorrichtung nach einem der vorhergehenden Ansprüche, **dadurch gekennzeichnet, dass** der gezahnte Statorkranz (15) des Stators und gegebenenfalls der wenigstens eine piezoelektrische Ring (17) des ersten Motors (13) koaxial um die Höhenrichtungsachse (XX) vorstehend an einer radialen Fläche gelagert sind, die zu der Übertragungsanordnung (4) gewandt ist, von einem Flansch (24), der an dem ersten Arm (12) der Gabel (2) befestigt ist, um den ersten Motor (13) zu lagern.

6. Ausrichtungsvorrichtung nach einem der vorhergehenden Ansprüche, **dadurch gekennzeichnet, dass** der ringförmige Rotoranker (20) des ersten Motors (13) wie auch das oder die Elemente (25), die drehfest mit dem Anker verbunden sind, Radlagermechanismen (26) durchqueren, die von der Gabel (2) gelagert sind.

7. Ausrichtungsvorrichtung nach einem der vorhergehenden Ansprüche, **dadurch gekennzeichnet, dass** die Übertragungsanordnung ein Laser-kompatibler optischer Block ist, der ein Bi-Prisma (4) oder eine Anordnung von wenigstens zwei Spiegeln umfasst.

8. Ausrichtungsvorrichtung vom Turm oder Ausrichtungskopf für zwei Achsen genannten Typ, um wenigstens eine Übertragungsanordnung (4) von wenigstens einem optischen oder/und elektromagnetischen Strahl bezüglich Höhenrichtung oder/und Seitenpeilung auszurichten, durch Drehung der Übertragungsanordnung (4) jeweils um eine Höhenrichtungsachse (XX) oder/und eine Seitenpeilungsachse (YY), Vorrichtung, wobei die Übertragungsanordnung (4) um eine als Höhenrichtungsachse (XX) bezeichnete erste Achse schwenkbar an einer Gabel (2) angebracht ist, und dazu geeignet ist, zu einer Drehung um die Höhenrichtungsachse durch einen ersten Motor (13) angetrieben zu werden, der durch die Gabel (2) gelagert ist, wobei die Gabel (2) um eine als Seitenpeilungsachse (YY) bezeichnete zweite Achse senkrecht zur Höhenrichtungsachse (XX) schwenkbar an einem Sockel (1) angebracht und dazu geeignet ist, von einem durch den Sockel (1) gelagerten zweiten Motor (14) zu einer Drehung um die Seitenpeilungsachse angetrieben zu werden, **dadurch gekennzeichnet, dass** der zweite Motor (14) ein piezoelektrischer Wanderwellen-Rotationsmotor ist, welcher umfasst:
- einen Stator, umfassend einen gezahnten Statorkranz (16) mit kreisförmigem Querschnitt, der von dem Sockel (1) gelagert ist,
- einen Rotor, umfassend einen ringförmigen Rotoranker (20) mit kreisförmigem Querschnitt, im Wesentlichen koaxial zu dem gezahnten Statorkranz (16) um die Seitenpeilungsachse (YY) herum, und der axial gegen den Kranz unter einer Vorspannkraft abgestützt ist, wobei der ringförmige Rotoranker (20) drehfest mit einem geführten Element (36) verbunden ist, welches geführte Element (36) eine Halterungsplattform (36) der Gabel (2) ist, mit der es verbunden ist, und das von dem zweiten Motor (14) zu einer Drehung um die Seitenpeilungsachse (YY) angetrieben wird, wobei das mit der Gabel (2) verbundene geführte Element (36) aus einer ringförmigen Scheibe gebildet ist, durch die die Gabel (2) drehbar um die Seitenpeilungsachse (YY) auf einer ringförmigen Platte (5) des Sockels (1) angebracht ist, wobei die ringförmige Scheibe (36) der Gabel (2) und die ringförmige Platte (5) des Sockels (1) jeweils eine zentrale Öffnung (37, 6) aufweisen, wobei die zentralen Öffnungen (37, 6) den Durchgang von wenigstens einem Strahl oder/und Mitteln zur Emission oder/und zum Empfang von wenigstens einem Strahl zu der Übertragungsanordnung (4) oder/und von der letzteren kommend ermöglichen, und
- wenigstens einen piezoelektrischen Ring (18) mit Anregungszonen für den gezahnten Statorkranz (16), wobei der Ring (18) ebenfalls im Wesentlichen koaxial zu dem Kranz (16) um die entsprechende Seitenpeilungsachse (YY) herum ist und gegen eine radiale Fläche des Kranzes (16) angewendet wird, um den Statorkranz (16) anregen zu können und die Dreh-Verlagerung des Rotors (20) herbeizuführen, wenn die Anregungszonen des piezoelektrischen Rings (18) mit einem geeigneten elektrischen Strom versorgt werden,
wobei bei der Ausrichtungsvorrichtung:
ENTWEDER der ringförmige Rotoranker (20') des zweiten Motors (14) direkt in die ringförmige Scheibe (36) der Gabel (2) integriert ist, wobei er an der radialen Fläche der ringförmigen Scheibe (36) hervorstehend ausgebildet ist, die zur Seite des Sockels (1) gewandt ist,
ODER der ringförmige Rotoranker (20) des zweiten Motors (14) direkt in ein axiales Ende einer Welle (35) zum Seitenpeilungs-Antrieb integriert ist, die rohrförmig, fest verbunden mit der ringförmigen Scheibe (36) der Gabel (2) ist und entlang der Seitenpeilungsachse (YY) gegenüber der Übertragungsanordnung (4) mündet, durch die zentrale Öffnung (37) der ringförmigen Scheibe (36) hindurch, für den Durchgang von wenigstens einem Strahl oder/und Mitteln zur Emission oder/und zum Empfang von wenigstens einem Strahl zu der Übertragungsanordnung (4) hin oder/und von dieser letzteren kommend.

9. Ausrichtungsvorrichtung nach Anspruch 8, **dadurch gekennzeichnet, dass** der gezahnte Statorkranz (16) des Stators und gegebenenfalls der wenigstens eine piezoelektrische Ring (18) des zweiten Motors (14) hervorstehend, koaxial um die Seitenpeilungsachse (YY), an einer radialen Fläche der ringförmigen Platte (5) des Sockels (1) gelagert sind, die zu der Gabel (2) gewandt ist.

10. Ausrichtungsvorrichtung nach einem der Ansprüche 8 oder 9, **dadurch gekennzeichnet, dass** der zweite Motor (14) an dem Sockel (1) mit einer Seitenpeilungs-Kodierungsanordnung (41) gekoppelt ist, die dazu geeignet ist, die Winkel-Drehung der Gabel (2) um die Seitenpeilungsachse (YY) zu messen.

11. Ausrichtungsvorrichtung nach Anspruch 10, **dadurch gekennzeichnet, dass** der zweite Motor (14) und die Seitenpeilungs-Kodierungsanordnung (41) in einer Motor-Kodierer-Anordnung verbunden sind, die an dem Sockel (1) so angebracht ist, dass der zweite Motor (14) und der Seitenpeilungs-Kodierer (41) im Wesentlichen zu beiden Seiten der ringförmigen Platte (5) des Sockels (1) angeordnet sind.

12. Ausrichtungsvorrichtung nach einem der Ansprüche 8 bis 11, **dadurch gekennzeichnet, dass** der ringförmige Rotoranker (20) des zweiten Motors (14) wie auch das oder die Elemente (35), die drehfest mit dem Anker verbunden sind, Radlagermechanismen (38) durchqueren, die von dem Sockel (1) gelagert sind.

13. Ausrichtungsvorrichtung nach einem der Ansprüche 8 bis 12, **dadurch gekennzeichnet, dass** die Übertragungsanordnung ein Laser-kompatibler optischer Block ist, der ein Bi-Prisma (4) oder eine Anordnung von wenigstens zwei Spiegeln umfasst.

14. Ausrichtungsvorrichtung nach einem der Ansprüche 8 bis 13, **dadurch gekennzeichnet, dass** der erste Motor (13) ebenfalls ein piezoelektrischer Wanderwellen-Rotationsmotor ist.

15. Ausrichtungsvorrichtung nach Anspruch 14, **dadurch gekennzeichnet, dass** der erste Motor (13) umfasst:
- einen Stator, umfassend einen gezahnten Statorkranz (15) mit kreisförmigem Querschnitt, der von der Gabel (2) gelagert ist,
- einen Rotor, umfassend einen ringförmigen Rotoranker (19) mit kreisförmigem Querschnitt, im Wesentlichen koaxial zu dem gezahnten Statorkranz (15) um die Höhenrichtungsachse (XX) herum, und axial gegen den Kranz unter einer Vorspannkraft abgestützt, wobei der ringförmige Rotoranker (19) drehfest mit einem geführten Element (10) verbunden ist, welches geführte Element eine erste Halterung (10) der Übertragungsanordnung (4) ist, mit der es verbunden ist, und das von dem ersten Motor zu einer Drehung um die Höhenrichtungsachse (XX) angetrieben wird, wobei die Übertragungsanordnung (4) durch die erste Halterung (10) drehbar um die Höhenrichtungsachse (XX) an einem ersten (12) von zwei Armen (12, 11) der Gabel (2) angebracht ist, zwischen denen die Übertragungsanordnung (4) schwenkt, und
- wenigstens einen piezoelektrischen Ring (17) mit Anregungszonen für den gezahnten Statorkranz (15), wobei der Ring (17) ebenfalls im Wesentlichen koaxial zu dem Kranz (15) um die Höhenrichtungsachse (XX) herum ist und gegen eine radiale Fläche des Kranzes (15) angewendet wird, um den Statorkranz (15) anregen zu können und die Dreh-Verlagerung des Rotors (19) herbeizuführen, wenn die Anregungszonen des piezoelektrischen Rings (17) mit einem geeigneten elektrischen Strom versorgt werden,
wobei bei der Ausrichtungsvorrichtung:
ENTWEDER der ringförmige Rotoranker (19) des ersten Motors (13) direkt in die erste Halterung (10) der Übertragungsanordnung (4) integriert ist, wobei er koaxial um die Höhenrichtungsachse (XX) an einer radiale Fläche der ersten Halterung (10) hervorstehend ausgebildet ist, die gegenüber des Statorkranzes (15) des ersten Motors (13) liegt, wobei der Kranz (15) von dem ersten Arm (12) der Gabel (2) gelagert ist,
ODER der ringförmige Rotoranker (19) des ersten Motors (13) direkt in ein axiales Ende einer Welle (25) zum Antrieb bezüglich der Höhenrichtung integriert ist, die im Wesentlichen koaxial zu dem Rotoranker (19) um die Höhenrichtungsachse (XX) ist und drehfest mit der ersten Halterung (10) der Übertragungsanordnung (4) um die Höhenrichtungsachse (XX) verbunden ist.
